Europäisches Patentamt

European Patent Office

Office européen des brevets

(11) Publication number: **0 179 287**
**B1**

(12) **EUROPEAN PATENT SPECIFICATION**

(45) Date of publication of patent specification: **15.02.89**

(51) Int. Cl.⁴: **F 16 G 1/28**

(21) Application number: **85112011.3**

(22) Date of filing: **23.09.85**

(54) Belt and its relative transmission.

(30) Priority: **15.10.84 IT 2315084**

(43) Date of publication of application:
**30.04.86 Bulletin 86/18**

(45) Publication of the grant of the patent:
**15.02.89 Bulletin 89/07**

(84) Designated Contracting States:
**DE FR GB**

(56) References cited:
**DE-A-1 939 381**
**DE-A-2 609 043**
**DE-B-1 113 619**
**GB-A-1 051 587**
**GB-A-1 052 264**

(73) Proprietor: **INDUSTRIE PIRELLI S.p.A.**
**Piazzale Cadorna, 5**
**I-20123 Milan (IT)**

(72) Inventor: **Tangorra, Giorgio**
**Via Crescitelli, 6**
**Monza (Milan) (IT)**

(74) Representative: **Mariani, Giorgio, Dr. et al**
**INDUSTRIE PIRELLI S.p.A. Direzione Brevetti**
**Piazzale Cadorna, 5**
**I-20123 Milano (IT)**

Courier Press, Leamington Spa, England.

## Description

The present invention is directed to a transmission of motion comprising a belt and two pulleys and more particularly to a transmission comprising a belt of flexible polymeric material, in particular elastomeric material, where the transmission of motion with the pulleys takes place through friction.

Belts in which the transmission of power takes place through the friction between the belt and the pulleys of the transmission are already known.

More generally, said belts can be in the form of flat belts which wind on smooth cylindrical pulleys or in the form of V-belts whose flanks are wedged at the corresponding V-shaped grooves of the pulleys.

Both these types of belt are used in various fields, but they can produce in some cases excessive energy losses or services limited by the friction forces.

In particular in the flat belts it is possible to have excessive sliding phenomena between the belt and the pulleys and said drawbacks can be overcome only by making recourse to at least one pulley with great dimensions.

The transmissions with V-belts sometimes produces an insufficient transversal rigidity when the flanks of the belt are subjected to the compressive stresses in the contacts with the grooves of the V-pulleys.

Furthermore from DE—AS 1113619 is known a V-Belt comprising a longitudinal groove on the inner portion.

The longitudinal groove is subjected to compression reducing its area to zero when the belt passes through the pulleys. The cited V-belt allows a uniform distribution of the stresses.

Nevertheless the V-belts, in all the known solutions, during the wedging step between the pulleys walls are subjected to the radial friction that opposes the wedging itself and consequently have the drawback of a power loss.

Therefore the aim of the present invention is to provide a belt in a transmission apt to give an improved fatigue resistance and a high flexibility of the belt and anyhow such as to improve not only the part of the transmission relating to the belt, but also that relating to the pulleys avoiding at the same time all the drawbacks of the known solutions.

The object of the present invention is a transmission system comprising a belt made of flexible polymeric material and at least two pulleys, said belt having a plurality of longitudinal reinforcing elements embodied in the cross section of the belt at a position close to its outer surface and at least one longitudinal slot on its inner surface defining a zone about which the belt can hinge characterised by the following features:

1) at least one of the two pulleys has at least one circular peripheral disc-like protuberance;

2) the walls of the belt slot engage the side faces of the disc-like protuberance and the bottom of the belt slot engages the edge of the disc-like protuberance;

3) the tension acting on the reinforcing elements acts to urge the walls of the belt slot against the side faces of the disc-like protuberance.

The present invention will be better understood by the following detailed description made by way of non limiting example with reference to the attached sheets of drawing in which:

—figure 1a is a perspective view of the belt for a transmission according to the invention;

—figure 1b is a partial perspective view of the belt and one pulley according to the invention;

—figure 2 is a cross section of the belt shown in figure 1b and one of the pulleys making part of the transmission;

—figure 3 is a front and a lateral view of one of the pulleys of the transmission;

—figure 4 is a bottom view of the belt of figure 2;

—figure 5 shows the belt of figure 2 in gripping conditions with the its relative pulley;

—figure 6a shows the centripetal stresses transmitted by a rope subjected to a pulling action on a pulley;

—figure 6b shows the lever mechanism in the transmission of the invention;

—figures 7 and 8 show in section a belt comprising a plurality of slots, each slot is similar to that shown in figure 2;

—figure 9 is an embodiment of the belt provided with a cogged surface;

—figure 10 is a cross section of a belt having a plurality of slots on both sides;

—figures 11 and 12 show some alternative embodiments comprising asymmetrical shapes of the belt with respect to the plane defining the longitudinal slot;

figures 13 and 14 show some alternative embodiments of the invention;

—figures 15 and 16 show in cross section some embodiments of the slot of the present belt.

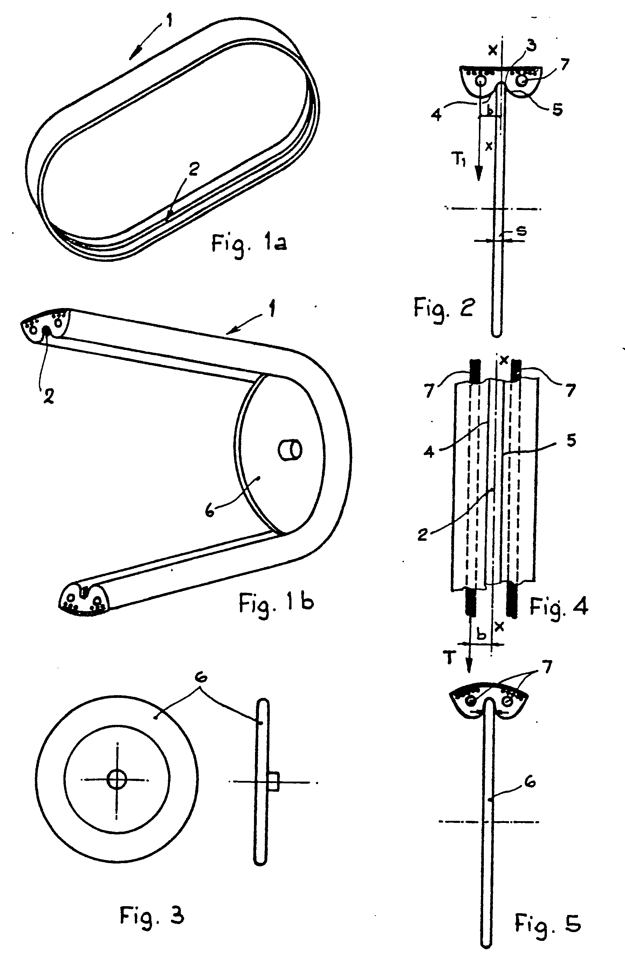

In figure 1 the reference numeral 1 indicates a driving belt of flexible polymeric material having the essential characteristic of being provided with a slot 2 delimited by a bottom 3 and lateral walls 4, 5 (figure 2).

The flexible polymeric material forming the belt body is usually an elastomer of the type used in the flexible driving belts. The polymeric material can be in particular a polyurethane or polychloroprene or other materials as for instance neoprene or natural rubber and the like.

The belt 1 is a part of a transmission of motion comprising at least two pulleys, a driving and a driven pulley respectively, one of which is represented with 6 in figures 2 and 3.

As shown, the pulleys have a disc-like shape, i.e. have a thin thickness to be associated to the particular type of belt forming the object of the invention.

It is pointed out that the belt in rest conditions, i.e. before embracing the pulleys, has the transversal dimensions of the slot greater than the thickness s of the disc; therefore in these situations the belt is in contact with the disc only with the bottom 3 and the lateral walls 4 and 5 are at a distance from the opposite lateral surfaces of the disc-shaped pulley.

The belt comprises a plurality of longitudinal inserts disposed on a ring concentric with the belt and oriented according to the longitudinal direction of the belt.

For sake of simplicity and in one embodiment relative to the figure 2, only two longitudinal inserts in the form of cord 7 have been drawn.

The cords 7 are on one same plane and at an average distance b from the central axis X—X passing through the slot center.

In all the embodiments of the present invention the longitudinal inserts can be represented by cords, threads, filaments of textile material, for instance of Kevlar, nylon, or in the form of thin metallic layers or in the form of mineral fibers, for instance glass fibers.

As shown in the figure 1b, the belt comprises a particular zone at the slot that can be devoid of resistant elements; said zone will be called hereinafter hinged zone having a function that will be stressed with reference to the subsequent figures.

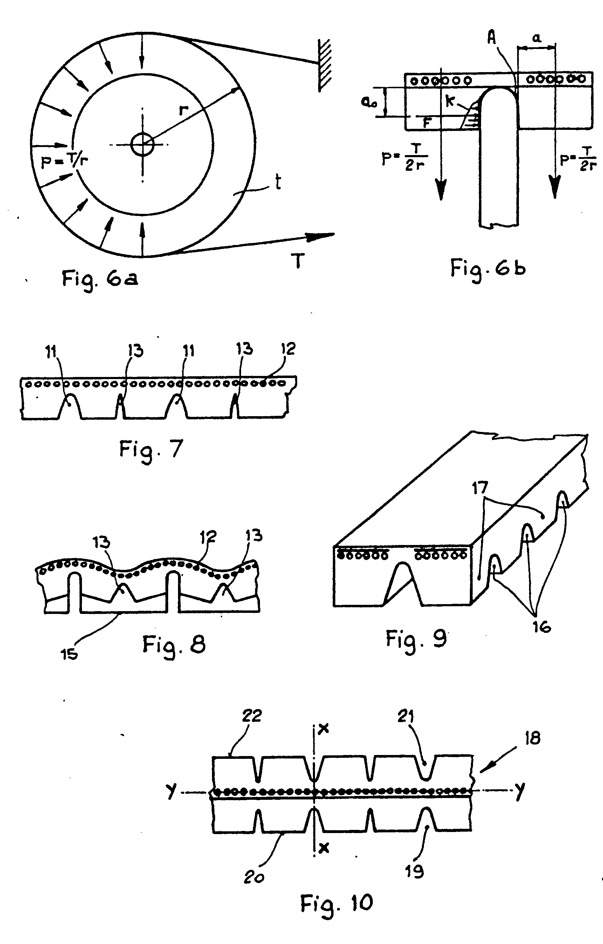

In the transmission of motion the belt 1 passing from the condition previous to its winding on the pulley to that of its winding on the pulley behaves substantially as the rope represented in the figure 6 subjected to a pulling action T.

The rope embracing the pulley t statistically causes a stress condition p due to its pulling action which is radially directed and linked to the pull and to the radius of curvature r from the formula T=p/r.

Likewise, the belt 1 subjected to a pulling action T will give rise to a stress condition T1 directed toward the center with stresses disposed on a plane parallel to the central plane X—X of the disc. However, in this case lacking the disc surface in correspondence of the whole part of the belt lateral to the slot 2, the stress condition T1 on such parts of the belt beside of slot multiplied by the distance b will give rise a torque around the hinged zone with consequent rotation and approach of the lateral walls of the belt slot to the opposite lateral surfaces of the disc-like pulleys (figure 5).

Consequently the belt engages itself with the pulley and drags this latter through friction.

The characteristics of the present belt are very different from that which is already known in the V-belts.

In fact the V-belt during the wedging step between the pulley walls is subjected to the radial friction that opposes the wedging itself and consequently a power loss occurs.

Here, the belt does not suffer any type of opposition during the winding with the pulley since it is not limited by the presence of the lateral walls of the V-pulley groove and can exercise all the torque produced by the pulling action to permit the slot walls to rest against the opposite faces of the disc.

Therefore in the present solution there is not any power loss. Moreover in the belt according to the invention is possible to adjust the lever mechanisms to extend the action of the belt on the pulley.

This characteristic can be better stressed by making reference to the figure 6b in which:

—p=T/2r represents the centripetal force resulting from the pulling action;

—r, represents the radius of the disc;

—a, represents the distance of the centripetal force from the corner A of the hinged zone;

—F, represents the force resulting from the thrusts exercised on one face of the pulley;

—K, represents the possible curve that defines the intensity of the single thrusts;

—$a_0$, represents the distance of the resulting force F from the bottom of the slot.

The working condition of the belt on the pulley is expressed by the equilibrium relation to the involved torques and i.e. by:

$a \times p = F \times a_0$ from which there is: $F/p = a/a_0$.

As shown in the previously cited relation, in the present solution it is possible to adjust the lever mechanism after a proper choice of the value so as to increase with equal pull action the value of the thrust F that originates the gripping conditions.

The belt, whose essential and working characteristics have been previously illustrated and described, can comprise further embodiments as explained hereinafter.

In a particular embodiment the belt can comprise a plurality of slots 11 which are all parallel to one another (figures 7 and 8).

In this embodiment the reinforcing structure 12 could be formed by a plurality of flexible and inextensible longitudinal elements, for instance in the form of cords, arranged on a plane overlying the slots.

The cords could be disposed also in the hinged zone and moreover thin fabric layers could be associated to the cords over or under the plane of the cords, the whole selected so that the total resistance of the reinforcing pack does not impede the formation of hinged zones apt to permit the approach between the lateral walls of the various slots during the winding of the belt around the pulleys of the transmission.

Preferably the belt provided with a plurality of slots 11 is characterized for the presence of particular means apt to facilitate the engagement of the walls of the various slots on the corresponding lateral surfaces of the pulley.

In the particular embodiment of the figures 7 and 8 the means to facilitate the engagement can be represented by a plurality of cuts 13 extended longitudinally in the elastomeric material and alternated to the slots.

As it appears from the figure 8, in the conditions of torque transmission between the belt and the pulley, the presence of the cuts permits a strong engagement of all the walls of the various slots 11 with the disc-like radial protuberances which are all integrally disposed on a single hub in a pulley 15.

The solution represented in the figures 7 and 8 is particularly suitable when it is necessary to transmit great powers.

The belt according to the present invention is suitable to be wound on pulleys having small radii of curvature.

This favourable circumstance depends on the shape of the belt, which is substantially flat and therefore easily deformable on runs with great curvatures.

In particular in the solutions where it is required to transmit great powers, the cross section of the belt although remaining substantially flat can assume quite great areas making recourse, where and if necessary, to a high longitudinal flexibility through the information (figure 9) of a cogging defined by spaces 16 alternated to teeth 17 having an arrangement transversal to the maximum extension of the belt.

Figure 10 shows a belt 18 comprising all the characteristics cited up to now with the alternative of a characteristic apt to make the belt completely suitable for working on both opposite faces.

In fact the belt 18 comprises a plurality of slots 19 having an opening on the side 20 and a plurality of opposite slots 21 on the side 22 of the same belt.

Preferably the belt can be realized with parts that are symmetrical with respect to the central plane Y—Y crossing one half of the belt body thickness.

In another embodiment said symmetry could lack and for instance, the cogging of figure 10 facing one side could be offset with respect to that arranged on the opposite side.

Also the belt of the previous figures represented with symmetrical parts with respect to the vertical plane X—X passing through the center of the slot, as for instance indicated in the figure 10, could have solutions devoid of said symmetry.

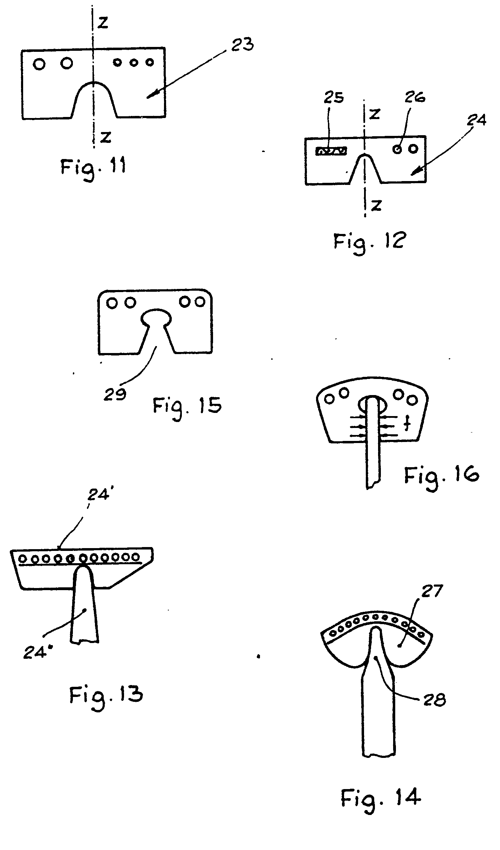

For instance, in an alternative embodiment shown in figure 11, the belt 23 can comprise at the sides of the plane Z—Z passing through the center of the slot a number of cords different from that relating to the opposite side, the total section being the same.

Also, for instance, as shown in figure 12, the belt 24 could comprise a resistant structure 25 with respect to the plane Z—Z passing through the center of the slot, said resistant structure is represented by a tape and is different from the resistant structure beyond the plane of symmetry defined by two cards 26.

Belts 24' where in a cross section with regard to the axis passing through the slot the asymmetry has a shape as that visible in figure 13 could be obtained according to other solutions.

The asymmetry could also be determined by parts with different weight.

Always in the embodiment of figure 13 the disc 24'' could have surfaces inclined around 5° with respect to the central plane; in such case the walls of the slot are inclined, but form between them a greater angle for the fact of having a transversal dimension greater than the disc.

Figure 14 represents a belt 27 acting on a disc 28 comprising opposite faces with a substantially curvilinear profile.

The invention comprises also those solutions in which the profile of the pulley at its peripheral part, with respect to the radial direction, has angles of inclination or profiles more complicated and more suitable to wedge themselves into the slot of the belt.

In all the cited solutions the slot of the belt could have various geometrical shapes.

In the embodiment shown in the figures 15 and 16, it is possible to have a belt in which the space 29, in a cross section to the belt, has a first innermost portion with an enlarged shape and a subsequent portion with a path diverging in linear fashion from the walls.

The tightening effect determined by the solution of figure 15 is better represented in figure 16 through small arrows f.

The solution of the figures 15 and 16, as in the previous ones, stress the possibility of providing proper means apt to increase the friction with the surface of the pulleys.

In an embodiment according to the invention the transmission could be characterized for instance by pulleys having disc-like radial protuberances of metallic material and a belt with charges dispersed in the elastomeric material in the form of fibers oriented in any whatsoever direction on condition that they come out on the slot walls.

In particular in a preferred solution said means apt to increase the friction could be formed by fibers directed according to a transversal direction.

Said fibers could be formed by aramide resins or by other materials as nylon, polyester, rayon.

The fibers could have lengths comprised between 0.5 mm and 5 mm and a diameter comprised between 10 microns and 400 microns.

In alternative to the previous solution, it is possible to make recourse to a solution in which the disc-like lateral surfaces of the pulleys can be formed by metallic surfaces covered with materials having a high friction coefficient.

In further solutions the pulleys could be obtained by sheet shearings and in other solutions through a molding operation with polyamide resins added with charges apt to define a high friction coefficient.

The invention achieves all the aimed purposes In fact as the present belt has a thin thickness shape produces a flexibility which is comparable with that of the flat belts although basing on a completely different working principle.

However, the present belt, with respect to the flat belts, eliminates the excessive sliding phenomena and this is due to the fact that the engaging effect of the walls of the slots of the present belt is comparable to real mechanical jaws which tighten on the corresponding parts of the disc-like pulleys provided with lever mechanisms that can be adjusted time by time.

Moreover the belt according to the invention avoids all those pulling and wedging phenomena and consequent loss of power, that are common to the V-belts.

In fact as shown the engagement between the belt and the pulley takes place in consequence of the action of the belt lateral walls, on the opposite faces of the pulleys that remain internal to the belt and the closing of the slot takes place when the belt is already curved on the pulley and not before.

In substance, in the present belt all the drawbacks deriving from the need of transversally stiffening the V-belt are avoided together with the consequent drawback of the V-belts deriving from the fact that an excessive transversal stiffening of the belt could produce a longitudinal stiffening of the belt that makes it not much adaptable to the pulleys with a small radius of curvature.

A particular inventive aspect of the invention is constituted by the principle of a transmission of motion through friction determined by the contact between the walls of the slots obtained in the belt and the opposite front surfaces of the pulleys.

The result of this type of working is the disc-like construction of the pulley, as said several times in the present application, i.e. a thin construction that can be realized with a structure of very light weight.

Therefore the present transmission being formed by belts and pulleys whose masses are substantially light permits to move the resonance frequency of the system to high values, anyhow out of the service ones.

The adaptability of the whole transmission to all those applications in which a great noiselessness is required, that is in the mechanical precision systems, in the automobile industry and in various industrial applications, descends from the cited lightness characteristic.

Although some particular embodiments of the present invention have been illustrated and described, it is understood that the present invention includes in its scope any possible alternative embodiments accessible to a technician of the field, for instance the invention is directed to belts in which the inextensible longitudinal elements can assume both the shape of cords, threads, filaments, i.e. continuous elongated bodies, and discontinuous configurations, as it could be obtained for instance by using a plurality of fibers whose disposition is mainly oriented according to longitudinal directions to the belt body so as to absorb the pulling action necessary to the transmission of motion.

Also, the invention includes in its principle the belts whose body is constituted in general by a flexible polymeric material, this term is intended to mean natural rubber, synthetic rubber and compounds of these latter, as known to the technicians of the art.

It is also evident that the present invention includes in its principle all those belts in which the longitudinal edges instead of being squadred as shown in the figures assume different configurations with cuts or lightening spaces in the elastomeric material to make the belt lighter and devoid of noise, as well as the different shapes that it will be considered advisable to give to the outer profile of the discs, as single angles of inclination, arcs of a circle, parabolas and the like.

The pulley could also comprise on the opposite faces irregularities in the form of projections alternated to grooves realized so as to permit a localized deformation of the elastomeric material of the walls of the belt slot.

This solution permits to improve the tightness between the belt and the pulleys which is thus entrusted not only to the friction, but also to an engagement mechanism.

The present invention includes also in its principle the solutions of transmission in which the belt is provided with the slot as described, the smaller diameter pulley is provided with a disc-like protuberance for engaging with the slot walls, and the second greater diameter pulley is provided with a smooth cylindrical outer surface.

## Claims

1. Transmission system comprising a belt (1) made of flexible polymeric material and at least two pulleys (6), said belt having a plurality of longitudinal reinforcing elements (7) embodied in the cross section of the belt at a position close to its outer surface and at least one longitudinal slot (2) on its inner surface defining a zone about which the belt can hinge characterised by the following features:

1) at least one of the two pulleys has at least one circular peripheral disc-like protuberance,

2) the walls (4, 5) of the belt slot (2) engage the side faces of the disc-like protuberance and the bottom (3) of the belt slot engages the edge of the disc-like protuberance,

3) the tension acting on the reinforcing elements acts to urge the walls (4, 5) of the belt slot (2) against the side faces of the disc-like protuberance.

2. Transmission of motion as in claim 1, characterized by the fact that said two pulleys are two discs.

3. Transmission of motion as in claim 1, characterized in the fact that each pulley is formed by a plurality of discs integrally approached to one another on a single hub put into movement by a plurality of slots of a single belt when the walls of the said slots are acting with the opposite lateral surfaces of the discs.

4. Transmission as in claim 1, characterized by the fact that the profile of the pulleys (6) at its peripheral part (28) has angles of inclination with respect to the radial direction, apt to improve the wedging in the belt slot.

5. Transmission as in claim 1, characterized by the fact that said longitudinal reinforcing elements (7) of the belt are arranged only in lateral position to the slot.

6. Transmission as claim 1, characterized by the fact that said belt comprises a plurality of parallel longitudinal slots (11).

7. Transmission as in claim 6, characterized by the fact of comprising in a position alternated to the slots (11) means (13) to facilitate the engagement of the walls of the slots to the opposits lateral surfaces of the pulleys.

8. Transmission as in any one of the preceding claims, characterized the fact on comprising on at least one of the furthermost surfaces of the belt a cogging (16) transversal to the belt direction.

9. Transmission as in any one of the preceding claims, characterized by the fact that said belt comprises on the walls of the slots fibers for improving the engagement with the surfaces of the pulleys.

## Patentansprüche

1. Riemengetrieb umfassend einen Riemen (1) aus einem biegsamen polymeren Material, und wenigstens zwei Riemenscheiben (6), wobei der Riemen eine Mehrzahl von sich in Längsrichtung erstreckenden Verstärkungselementen (7), die im Querschnitt des Riemens an einer Position nahe seiner Außenfläche angeordnet sind, und wenigstens einen Längsschlitz (2) an seiner Innenfläche aufweist, der eine Zone definiert, in welcher der Riemen sich gelenkig bewegen kann, gekennzeichnet durch die nachstehenden Merkmale:

1) wenigstens eine der beiden Riemenscheiben hat wenigstens einen kreisförmigen scheibenartigen Umfangsvorsprung,

2) die Wände (4, 5) das Riemenschlitzes (2) treten mit den Seitenflächen des scheibenartigen Vorsprunges in Eingriff, und der Boden (3) des Riemenschlitzes tritt mit der Kante des scheibenartigen Vorsprunges in Eingriff,

3) die auf die Verstärkungselemente wirkende Zugkraft oder Spannung wirkt dahingehend, die Wände (4, 5) des Riemenschlitzes (2) gegen die Seitenflächen des scheibenartigen Vorsprunges zu drücken.

2. Riemengetriebe nach Anspruch 1, dadurch gekennzeichnet, daß die beiden Riemenscheiben zwei Scheiben sind.

3. Riemengetriebe nach Anspruch 1, dadurch gekennzeichnet, daß jede Riemenscheibe durch eine Mehrzahl von Scheiben gebildet ist, die integral einander auf einer einzigen Nabe angenähert sind, die durch eine Mehrzahl von Schlitzen eines einzigen Riemens in Bewegung gesetzt wird, wenn die Wände der Schlitze mit den gegenüberliegenden Seitenflächen der Scheiben zusammenwirken.

4. Riemengetriebe nach Anspruch 1, dadurch gekennzeichnet, daß das Profil der Riemenscheiben (6) an ihrem Umfangsteil (28) Schrägwinkel mit Bezug auf die radiale Richtung hat derart, daß die Keilwirkung in dem Riemenschlitz verbessert werden kann.

5. Riemengetriebe nach Anspruch 1, dadurch gekennzeichnet, daß die sich in Längsrichtung erstreckenden Verstärkungselemente (7) des Riemens lediglich in seitlicher Position zu dem Schlitz angeordnet sind.

6. Riemengetriebe nach Anspruch 1, dadurch gekennzeichnet, daß der Riemen eine Mehrzahl von parallelen Längsschlitzen (11) aufweist.

7. Riemengetriebe nach Anspruch 6, dadurch gekennzeichnet, daß in einer Position alternierend zu den Schlitzen (11) Mittel (13) vorgesehen sind, um den Eingriff der Wände der Schlitze mit den gegenüberliegenden Seitenflächen der Riemenscheiben zu erleichtern.

8. Riemengetriebe nach einem der vorhergehenden Ansprüche, dadurch gekennzeichnet, daß an wenigstens einer der weitesten Flächen des Riemens eine Verzahnung (16) quer zur Riemenrichtung vorgesehen ist.

9. Riemengetriebe nach einem der vorhergehenden Ansprüche, dadurch gekennzeichnet, daß der Riemen an den Wänden der Schlitze Fasern aufweist zum Verbessern des Eingriffs mit den Flächen der Riemenscheiben.

## Revendications

1. Système de transmission comprenant une courroie (1) formée d'une matière polymère flexible et au moins deux poulies (6), ladite courroie comportant une pluralité d'éléments longitudinaux de renforcement (7) noyés dans la section droite de la courroie dans une position proche de sa surface extérieure et au moins une encoche longitudinale (2) dans sa surface intérieure de manière à définir une zone autour de laquelle la courroie peut être articulée, caractérisé par les particularités suivantes:

1) au moins une des deux poulies comporte au moins une protubérance périphérique circulaire en forme de disque,

2) les parois (4, 5) de l'encoche (2) de la courroie entrent en contact avec les faces latérales de la protubérance en forme de disque et le fond (3) de l'encoche de courroie entre en contact avec le bord de la protubérance en forme de disque,

3) la tension s'exerçant sur les éléments de renforcement agit de façon à pousser les parois (4, 5) de l'encoche (2) de courroie contre les faces latérales de la protubérance en forme de disque.

2. Transmission de mouvement selon la revendication 1, caractérisée par le fait que les deux poulies sont deux disques.

3. Transmission de mouvement selon la revendication 1, caractérisée par le fait que chaque poulie est formée par une pluralité de disques rapprochés intégralement l'un de l'autre sur un seul moyeu mis en mouvement par une pluralité d'encoches d'une seule courroie lorsque les parois desdites encoches coopèrent avec des surfaces latérales opposées des disques.

4. Transmission selon la revendication 1, caractérisée par le fait que le profil des poulies (6) sur leur partie périphérique (28) comporte, par rapport à la direction radiale, des angles d'inclinaison qui servent à eméliorer le coincement dans l'encoche de courroie.

5. Transmission selon la revendication 1, caractérisée par le fait que lesdits éléments de renforcement longitudinal (7) de la courroie sont disposés seulement dans une position latérale par rapport à l'encoche.

6. Transmission selon la revendication 1, caractérisée par le fait que ladite courroie comprend une pluralité d'encoches longitudinales parallèles (11).

7. Transmission selon la revendication 6, caractérisée par le fait qu'elle comprend, dans des positions alternées avec les encoches (11) des moyens (13) pour faciliter l'application des parois des encoches contre les surfaces latérales opposées des poulies.

8. Transmission selon une quelconque des revendications précédentes, caractérisée par le fait qu'elle comprend, sur au moins une des surfaces les plus éloignées de la courroie, un crantage (16) orienté transversalement à la direction de la courroie.

9. Transmission selon une quelconque des revendications précédentes, caractérisée par le fait que ladite courroie comprend, sur les parois des encoches, des fibres pour améliorer l'accrochage avec les surfaces des poulies.

Fig. 1a

Fig. 2

Fig. 1 b

Fig. 4

Fig. 3

Fig. 5

$$P = \frac{T}{r}$$

r

t

T

Fig. 6a

A

a

$$P = \frac{T}{2r}$$

$$P = \frac{T}{2r}$$

k

F

a₀

Fig. 6b

11  13  11  13  12

Fig. 7

13  12  13

15

Fig. 8

17

16

Fig. 9

22  x  21  18

Y — Y

20  x  19

Fig. 10

2

Fig. 11

Fig. 12

Fig. 15

Fig. 16

Fig. 13

Fig. 14